# EUROPEAN PATENT SPECIFICATION

(11) **EP 0 984 506 B1**
(45) Date of publication and mention of the grant of the patent: **11.12.2002**
(21) Application number: 99116827.9
(22) Date of filing: 02.09.1999
(51) Int. Cl.: H01Q 1/12

(54) **Glass antenna device for an automobile**
Scheibenantenne für ein Automobil
Antenne de vitre pour une voiture automobile

(30) Priority: 03.09.1998 JP 25011298; 26.03.1999 JP 8450599
(43) Date of publication of application: 08.03.2000
(73) Proprietor: ASAHI GLASS COMPANY LTD., Tokyo 100-8405 (JP)
(72) Inventor: Terashima, Fumitaka c/o Asahi Glass Co.Ltd., Aichi (JP); Ikutame, Nobuyashi c/o Asahi Glass Co.Ltd., Tokyo 100-8305 (JP)
(74) Representative: Müller-Boré & Partner Patentanwälte

(56) References cited:
- EP-A- 0 629 018
- US-A- 5 598 170
- US-A- 5 699 071
- US-A- 5 905 468
- PATENT ABSTRACTS OF JAPAN vol. 1998, no. 08, 30 June 1998 (1998-06-30) & JP 10 079615 A (ASAHI GLASS CO LTD), 24 March 1998 (1998-03-24)

## Description

The present invention relates to a glass antenna device for an automobile suitable for receiving signals in, for example, a long wave broadcast band (150 - 280 kHz), a middle wave broadcast band (520 - 1700 kHz), a short wave broadcast band (3 - 30 MHz), an FM broadcast band of Japan (76 - 90 MHz), an FM broadcast band of U.S.A. (88 - 108 MHz), a TV-VHF band (90 - 108 MHz, 170 - 222 MHz), a TV-UHF band (470 - 770 MHz) and so on, which is of high sensitivity and low noise and which is rich in productivity.

As a glass antenna device for an automobile which is capable of improving the sensitivity by utilizing resonance, there has been proposed a glass antenna device for an automobile as shown in Figure 7 (JP-Y-4-53070).

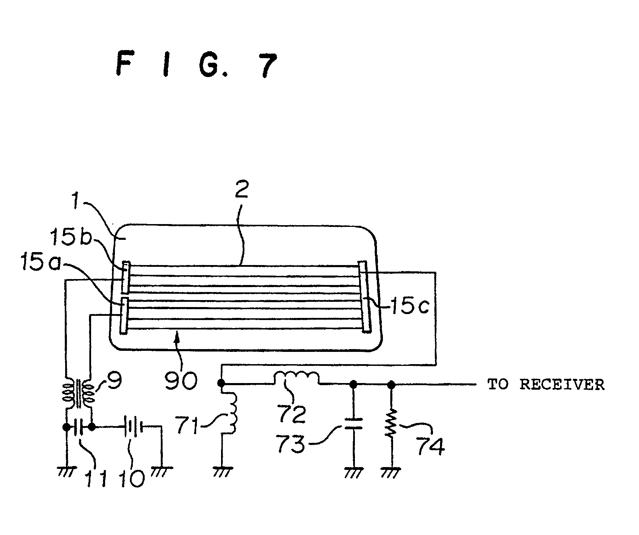

In this conventional example, a defogger 90 comprising heater strips 2 and bus bars 15a, 15b, 15c is provided on a rear window glass sheet 1 fitted to a rear window opening of an automobile. There are the bus bar 15a at a lower portion and the bus bar 15b at an upper portion on a left side of the defogger 90. The lower bus bar 15a is connected to the automobile body as the earth and the upper bus bar 15b is connected to an anode of a d.c. power source 10. A fed current flows from the upper bus bar 15b through the bus bar 15c at a right portion to the lower bus bar 15a in a channel-like form. The defogger shown in Figure 7 is in a so-called channel-like form.

In the glass antenna device shown in Figure 7, a choke coil 9 is connected between the bus bars 15a, 15b and the d.c. power source 10 for the defogger 90, and by increasing the impedance of the choke coil 9 in a high frequency band region, a direct current is allowed to pass from the d.c. power source 10 to the defogger 90 but a current in the high frequency band region such as a broadcast band region or the like is blocked whereby the defogger 90 is utilized as an antenna.

Further, a parallel resonance is generated by the stray capacitance to ground (hereinbelow, referred simply as the stray capacitance) of the defogger 90 and a coil 71 in a middle wave broadcast band, and a received signal in the middle wave broadcast band is passed in association with coil 72, a capacitor 73 and a resistor 74. Reference numeral 11 designates a capacitor for cutting noises. In the conventional example having such construction as in Figure 7, an attempt has been made to improve the sensitivity and to reduce noises.

In the conventional example, however, the stray capacitance of a cable connecting the defogger 90 to a receiver constituted a main factor to cause the parallel resonance. Further, the S/N ratio was poor and the sensitivity was insufficient because there was a parallel resonance frequency in the middle broadcast band.

Further, when the defogger 90 was used as an antenna commonly used for the middle wave broadcast band and the FM broadcast band and if the shape of the defogger 90 was optimized for receiving middle wave broadcast signals, there were problems that the sensitivity and directivity for FM broadcasting were insufficient in a case of receiving FM broadcast signals.

From US 5,699,071 A a glass antenna system for an automobile is known which comprises a T-shaped dynamic impedance matching circuit. The circuit comprises at least two varactor diodes each applied to a channel selection voltage to match the FM antenna impedance with that of the FM receiver including that of the transmission cable.

In JP 10079615 A a window glass plate is described which is provided with a first antenna conductor receiving low reception frequency band and a second antenna conductor receiving a high reception frequency band. A first coil having a low impedance and mainly the stray capacitance or the high reception frequency band cause a first resonance. A second coil and the stray capacitance of the low reception frequency band cause apparently a second resonance.

It is the object of the invention to provide a glass antenna device for an automobile which is of high sensitivity, reduces noises and is good in productivity.

This object is fulfilled by a glass antenna device having the features disclosed in claim 1. Preferred embodiments are defined in the dependent subclaims.

In drawings:
Figure 1 is a diagram showing the basic structure of an embodiment of the glass antenna device for an automobile according to the present invention;
Figure 2 is a diagram of another embodiment of the glass antenna device of the present invention;
Figure 3 is an equivalent circuit diagram for explaining the function of an antenna conductor 3, a defogger 90 and a resonance circuit 6 in the glass antenna shown in Figure 1;
Figure 4 is a circuit diagram showing a modified example of the resonance circuit 6;
Figure 5 is a characteristic diagram of frequency vs sensitivity in comparing a pole antenna for a middle wave broadcast band concerning example 1;
Figure 6 is a characteristic diagram of frequency vs sensitivity for an FM broadcast band concerning example 1;
Figure 7 is a diagram showing a conventional glass antenna;
Figure 8 is a diagram showing an embodiment of the glass antenna of a type separate from that in Figure 1;
Figure 9 is a diagram showing another embodiment of the glass antenna of the present invention wherein the order of connecting a first coil 31 and a high frequency choking coil 52 is changed from that in Figure 8;
Figure 10 is a characteristic diagram of frequency vs sensitivity in comparing a pole antenna for a middle broadcast band in example 2;
Figure 11 is a characteristic diagram of frequency vs sensitivity in comparing a pole antenna for a middle broadcast band in example 3;
Figure 12 is a characteristic diagram of frequency vs sensitivity in comparing a pole antenna for a middle wave broadcast band in example 4;
Figure 13 is a characteristic diagram of frequency vs sensitivity in comparing a pole antenna for a middle wave broadcast band in example 5;
Figure 14 is a characteristic diagram of frequency vs sensitivity in comparing a pole antenna for a middle wave broadcast band in example 6; and
Figure 15 is a characteristic diagram of frequency vs sensitivity in comparing a pole antenna for a middle wave broadcast band in example 7.

Detailed description of preferred embodiments of the present invention will be descried with reference to the drawings.

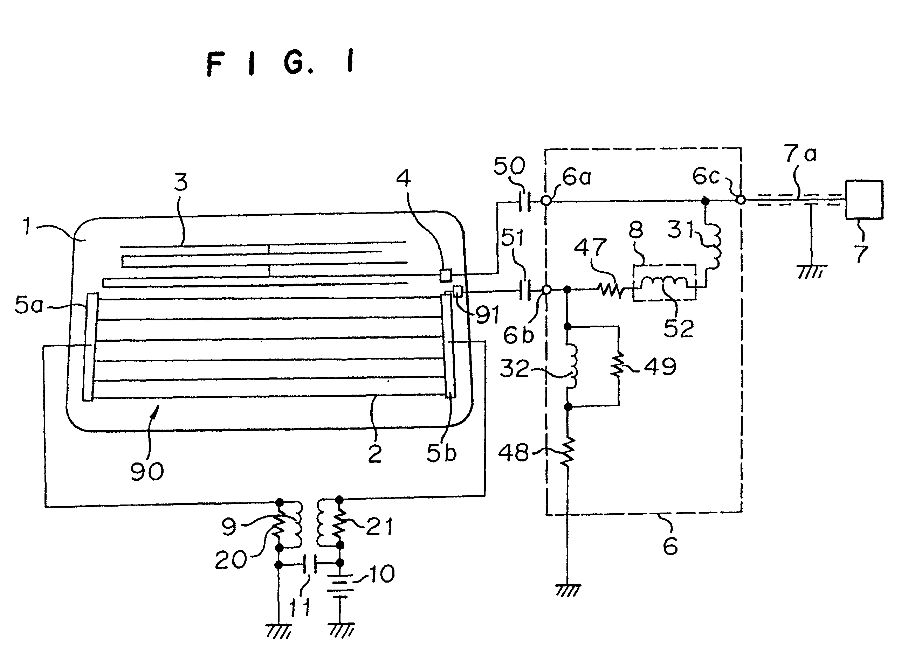

Figure 1 is a diagram showing the basic structure of an embodiment of the glass antenna device for an automobile of the present invention wherein a rear window glass sheet 1 fitted to a rear window opening of an automobile is used. In Figure 1, reference numeral 2 designates heater strips, numeral 3 an antenna conductor, numeral 4 a power feeding point for the antenna conductor 3, numerals 5a, 5b designate bus bars, numeral 6 designates a resonance circuit, numeral 6a a first input terminal for the resonance circuit 6, numeral 6b a second input terminal for the resonance circuit 6, numeral 6c an output terminal for the resonance circuit 6, numeral 7 a receiver, numeral 7a a cable, numeral 8 a filter circuit, numerals 20, 21 designate damping resistors, numeral 31 designates a first coil as a first inductance element, numeral 32 a second coil as a second inductance element, numeral 47 designates a resistor for reducing automobile noises such as engine noises or the like, numerals 48, 49 designate damping resistors, numerals 50, 51 capacitors for cutting a direct current, numeral 52 designates a high frequency choking coil as a high frequency choking inductance element, numeral 90 a defogger and numeral 91 a power feeding point provided at an end of an outgoing line connected to the defogger 90.

In explanation described below, directions are indicated as directions on the drawings unless particularly specified. The resistors 47, 48, 49 and the high frequency choking coil 52 are provided according to requirement.

The first coil 31 is preferably used as a first inductance element; the second coil 32 is preferably used as a second inductance element, and the high frequency choking coil 52 is preferably used as a high frequency choking inductance element.

In the glass antenna device for an automobile shown in Figure 1, the power feeding point 4 and the first input terminal 6a of the resonance circuit 6 are electrically connected by interposing the capacitor 50 therebetween, and the output terminal 6c of the resonance circuit 6 is electrically connected to the input terminal of the receiver 7 by interposing the cable 7a. In other words, in the glass antenna device for an automobile shown in Figure 1, the power feeding point 4 is electrically connected to the input terminal of the receiver 7 (in Figure 1, the former is connected to the later with respect to high frequency signals), and received signals at the power feeding point 4 are supplied to the input terminal of the receiver 7. As the cable for connecting electrically the output terminal 6c of the resonance circuit 6 to the input terminal of the receiver 7, a co-axial cable is preferably used from the standpoint of reducing noises, however, it is not in particular limited to use the co-axial cable as far as noises can be reduced.

Since the second input terminal 6b of the resonance circuit 6 and the power feeding point 91 are electrically connected by interposing the capacitor 51 therebetween and the output terminal 6c of the resonance circuit 6 and the input terminal of the receiver 7 are electrically connected by interposing the cable 7a therebetween, the first coil 31 and the filter circuit 8 are electrically connected between a line connecting the antenna conductor 3 to the receiver 7 and the power feeding point 91. In more detail, the line connecting the antenna conductor 3 to the receiver 7 and the power feeding point 91 are electrically connected by a serial connection circuit of the first coil 31, the filter circuit 8 and the resistor 47. Accordingly, the first coil 31 and the filter circuit 8 are connected between the line connecting the antenna conductor 3 to the receiver 7 and the defogger 90.

It is not always necessary to connect the first coil 31 to the filter circuit 8 in the manner as shown in Figure 1, and it is sufficient that the first coil 31 and the filter circuit 8 are electrically connected between the line connecting the antenna conductor 3 to the receiver 7 and the defogger 90 by interposing at least one of a line and a circuit element. The power feeding point 91 is provided according to requirement. The second input terminal 6b may be connected directly to the bus bar 5b without providing the power feeding point 91.

In this specification, the circuit element includes any element usable for a semiconductor device and a circuit such as a capacitor, a coil, a resistor, a diode, a transistor or the like. Further, the line means an electrical connection with a wire or an electrical connection with a conductor pattern or a connector provided on a circuit substrate. In Figure 1, "the antenna conductor 3 and the defogger 90 are electrically connected" which is obtainable from capacitive coupling of the antenna conductor 3 to the defogger 90 excludes the line as defined above.

In Figure 1, the filter circuit 8 is composed of the high frequency choking coil 52. Although it is preferable to constitute the filter circuit 8 by the high frequency choking coil 52 in order to simplify the circuit structure of the filter circuit 8, the glass antenna device of this embodiment is not limited thereto, and another circuit structure can be used as the circuit structure for the filter circuit 8.

The second input terminal 6b of the resonance circuit 6 and the power feeding point 91 are electrically connected by interposing the capacitor 51 therebetween, and a serial connection circuit comprising the second coil 32 and the resistor 48 are electrically connected between the second input terminal 6b of the resonance circuit 6 and the automobile body as the earth. In other words, the second coil 32 is electrically connected between the power feeding point 91 and the automobile body as the earth (in Figure 1, they are connected with respect to high frequency signals). The way for connecting the second coil 32 is not in particular limited to the embodiment as shown in Figure 1, and instead, the second coil 32 may be electrically connected between the power feeding point 91 and the automobile body as the earth by interposing at least one of a line and a circuit element. In this specification, the automobile body as the earth indicates an electric conductive portion of the automobile body, which is usually made of a conductive material such as metal.

In the circuit structure shown in Figure 1, received signals in the defogger 90, which are to be passed through the first coil 31, and received signals in the antenna conductor 3 are synthesized and supplied to the receiver 7. Further, in Figure 1, the received signals in the antenna conductor 3 are fed through the capacitor 50 and the received signals are synthesized with the received signals from the defogger 90 before the synthesized signals are supplied to the receiver 7. However, the received signals in the antenna conductor 3 may be fed through a circuit element such as a coil, a resistor or the like, other than the capacitor, to be synthesized with the received signals from the defogger 90 before the synthesized signals are supplied to the receiver 7.

In Figure 1, there is a serial connection of the resistor 47, the high frequency choking coil 52 and the first coil 31 in order, in the observation from a second input terminal 6b side, between the second input terminal 6b and the output terminal 6c. In the present invention, however, it is not always necessary to use such order of connection, and there are varieties of the order of connection usable, e.g., an order comprising the resistor 47, the first coil 31 and the high frequency choking coil 52, an order comprising the high frequency choking coil 52, the first coil 31 and the resistor 47, an order comprising the high frequency choking coil 52, the resistor 47 and the first coil 31, an order comprising the first coil 31, the resistor 47 and the high frequency choking coil 52 or an order comprising the first coil 31, the high frequency choking coil 52 and the resistor 47.

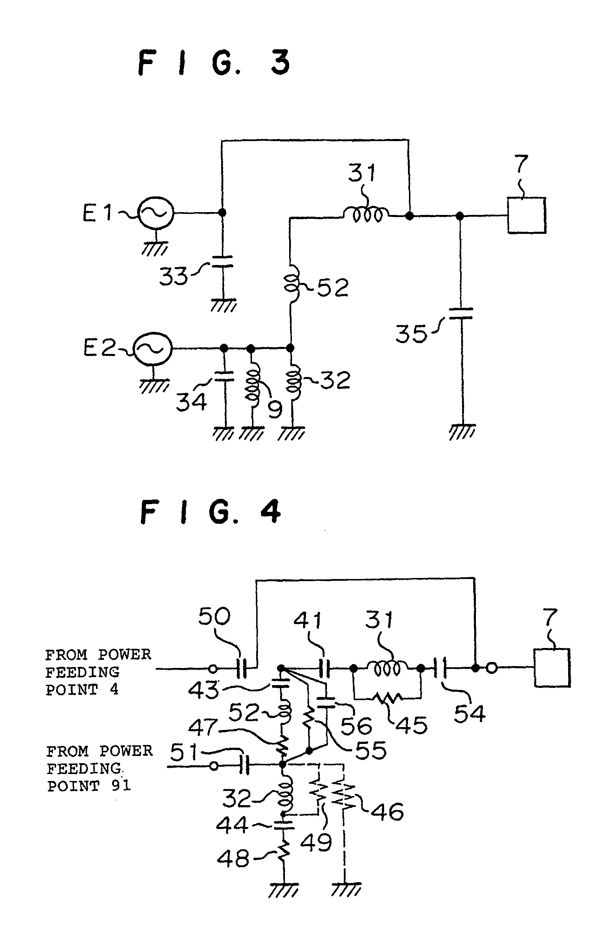

Figure 3 shows an equivalent circuit diagram for explaining the principle of the glass antenna device shown in Figure 1 wherein the resistors 47, 48 and 49 are omitted for simplifying the explanation; the portion of resistor 49 is opened, and the portions of the resistors 47 and 48 are short-circuited.

In Figure 3, E1 designates a signal voltage power source for the antenna conductor 3, E2 designates a signal voltage power source for the defogger 90, numeral 33 designates the stray capacitance of the antenna conductor 3, numeral 34 designates the stray capacitance of the defogger 90 and numeral 35 designates the stray capacitance of the cable 7a. When the antenna conductor 3 is disposed close to the defogger 90 to have a capacitive coupling relation, the close capacitance due to the capacitive coupling is connected in parallel to the high frequency choking coil 52. The stray capacitance 33 is generally 10 - 100 pF and the stray capacitance 34 is generally 50 - 300 pF.

The antenna conductor 3 is preferably used for receiving signals in a second frequency band (hereinbelow, referred to as a high frequency band) which is higher in frequency than a first frequency band (hereinbelow, referred to as a low frequency band), and it is preferable that the length and the shape of the antenna conductor 3 are determined to obtain a desired signal receiving performance in the high frequency band.

The antenna conductor 3 and the defogger 90 can be used for receiving signals in a middle broadcast band, an FM broadcast band, a short wave broadcast band, a long wave broadcast band, a TV-VHF band, a TV-UHF band and telephone. For example, the low frequency band is used for the middle wave broadcast band and the high frequency band is for at least one of the FM broadcast band, the TV-VHF band and the TV-UHF band.

In the present invention, the sensitivity to signals can be improved by generating resonance in two portions. For the first resonance, the impedance of the defogger 90 and the inductance of the first coil 31 are included as resonance elements.

The impedance of the defogger 90 is the impedance of a side of the defogger 90 viewed from the power feeding point 91. The impedance of the defogger 90 is mainly the stray capacitance 34.

Since the defogger 90 and the antenna conductor 3 are electrically connected by means of a line and/or a capacitive coupling (in Figure 1, there are connected with respect to high frequency signals), the impedance of the antenna conductor 3 influences also the first resonance, and it can be a resonance element for the first resonance.

The impedance of the antenna conductor 3 is mainly the stray capacitance 33. The impedance of the antenna conductor 3 is the impedance of a side of the antenna conductor 3 viewed from the power feeding point 4. Further, a resonance frequency for the first resonance may be adjusted by connecting a capacitive component in parallel between the stray capacitance 34 and the automobile body as the earth. The capacitive component can also be a resonance element for the first resonance.

For the first resonance, the stray capacitance of a line located around the first coil 31, the stray capacitance of the cable connected between the glass antenna and the receiver 7 (in a case of Figure 1, the stray capacitance 35) or the like influence also, and they can be resonance elements for the first resonance.

Impedance matching may be conducted between the defogger 90 and the receiver side by providing a new circuit element in the resonance circuit 6. The first coil 31 is generally about 10 µH - 1 mH. When the low frequency band is for the middle broadcast band, 50 - 500 µH is preferred, and 65 - 350 µH is more preferred to improve the sensitivity.

For the second resonance, the inductance of the second coil 32 and/or inductance of the choke coil 9 and the impedance of the defogger 90 are included as resonance elements. For the second coil 32, a coil having about 10 µH - 1 mH is generally used. When the low frequency band is for the middle wave band, 100 µH - 1 mH is preferable, and 300 - 850 µH is more preferable from the viewpoint of improving the sensitivity. Further, the resonance circuit 6 is preferably provided in the rear window glass sheet 1 or in the vicinity of the rear window glass sheet 1 so that the first resonance and the second resonance can be generated smoothly.

As described before, since the antenna conductor 3 and the defogger 90 are electrically connected, (in Figure 1, they are connected with respect to high frequency signals), the impedance of the antenna conductor 3 influences also the second resonance, and it can be a resonance element for the second resonance. Further, the stray capacitance of a line located around the antenna conductor 3, the stray capacitance of a line around the defogger 90, the stray capacitance of a line around the second coil 32 and so on influence also the second resonance, and they can be resonance elements for the second resonance. Further, the stray capacitance of the cable connected between the output terminal of the resonance circuit 6 and the receiver (in a case of Figure 1, the stray capacitance 35) or the like influences also the second resonance.

In Figure 1, the first resonance is a series resonance and the second resonance is a parallel resonance, which are preferably generated from the viewpoint of improving the sensitivity. In the present invention, however, the first resonance is not limited to a series resonance and the second resonance is not limited to a parallel resonance. Accordingly, the first resonance may be a parallel resonance and the second resonance may be a series resonance.

The function of the capacitor 51 will be described. The capacitor 51 is a circuit element to be provided according to requirement. If the capacitor 51 is not provided, and the location of the capacitor 51 is short-circuited, a direct current to be fed to the defogger 90 will flow into the second coil 32. Accordingly, a capacity of current for the second coil 32 should be increased, which reduces productivity. Further, since the direct current flowing to the defogger 90 flows to the automobile body as the earth through the coil 32, there is a waste of current. Accordingly, the capacitor 51 functions to block the direct current. Accordingly, it is preferable to provide the capacitor 51.

In Figure 1, the capacitor 51 is connected between the power feeding point 91 and the second coil 32 and the power feeding point 91 is connected to the bus bar 5b. Accordingly, the capacitor 51 is connected between the bus bar 5b and the second coil 32. However, the way of connection of the capacitor 51 is not limited to the embodiment shown in Figure 1. The capacitor 51 may be connected between the bus bar 5a and the second coil 32, or it may be connected between the heater strips 2 and the second coil 32. In other words, the position of the defogger 90 to which the second coil 32 is electrically connected, is not limited.

In a case that both the inductance of the second coil 32 and the impedance of the choke coil 9 are resonance elements for the second resonance in Figure 1 will be described. The inductance of a parallel connection circuit of the second coil 32 and the choke coil 9 and the impedance of the defogger 90 are included as resonance elements for the second resonance. In this case, it is preferable that the inductance value L₂ of the second coil 32 and the inductance value L_{CH} of the choke coil 9 satisfy a relation of 1.5 × L₂ ≦ L_{CH}, more preferably a relation of 2 × L₂ ≦ L_{CH}. Since a large current of several tens A (ampare) which flows into the defogger 90 is passed to the choke coil 9, the current capacity has to be increased. In a large scale production of choke coil, there is generally a scattering of about ±30% in L_{CH}. Accordingly, there causes a scattering in a resonance frequency for the second resonance, and accordingly, there causes a scattering in the sensitivity to signals in a low frequency band. Such disadvantage can be avoided by satisfying L₂ and L_{CH} with the above-mentioned relations.

In the glass antenna device for an automobile shown in Figure 1, the inductance of the parallel connection circuit of the second coil 32 and the choke coil 9 is the main inductance for generating the second resonance. Accordingly, the satisfaction of the relation of 1.5 × L₂ ≦ L_{CH} reduces the influence of the inductance of the choke coil 9 to the second resonance, and accordingly, the scattering of the resonance frequency for the second resonance can be reduced. In the case of 1.5 × L₂ ≦ L_{CH}, the scattering of the inductance of the parallel connection circuit comprising the second coil 32 and the choke coil 9 can be reduced to ±15% or less even when there is a scattering of ±30% in L_{CH}. When both the inductance of the second coil 32 and the inductance of the choke coil 9 are resonance elements for the second resonance and when the case of Figure 1 applies, the inductance of the parallel connection circuit of the second inductance element and the choke coil and the impedance of the defogger are main resonance elements for the second resonance.

In Figure 1, the resonance frequency of the first resonance and the resonance frequency of the second resonance are determined to be such ones to improve the sensitivity of signals in the low frequency band. Further, the high frequency choking coil 52 as an inductance element generally separates in terms of high frequency the antenna conductor 3 from the defogger 90 in the high frequency band, and functions to improve the sensitivity in the high frequency band without changing the effective length of conductor of the antenna conductor 3.

Further, in a case that the high frequency choking coil 52 is not provided and the location of the high frequency choking coil 52 is short-circuited, the self-resonance frequency of the choke coil 9 or the second coil 32 is low and shows a capacitive property. Accordingly, received signals in a high frequency band excited in the antenna conductor 3 leak to the automobile body as the earth. Therefore, the high frequency choking coil 52 is to be provided to prevent the leakage. In other words, the high frequency choking coil 52 functions as a filter circuit 8 to pass signals in the low frequency band and blocks or attenuates signals in the high frequency band.

Further, when the low frequency band is for a middle wave broadcast band and the high frequency band is for at least one of an FM broadcast band, a TV-VHF band and a TV-UHF band, the high frequency choking coil 52 should have an inductance value in a range of 0.1 - 100 µH. When the inductance value of the high frequency choking coil 52 is within the range of 0.1 - 100 µH, the sensitivity in the high frequency band is improved 0.2 dB or more in comparison with a case out of the range of 0.1 - 100 µH.

In particular, when the low frequency band is for a middle wave broadcast band and the high frequency band is for an FM broadcast band, the high frequency choking coil 52 has preferably an inductance value in a range of 0.3 - 20 µH. In the case of the range of 0.3 - 20 µH, the sensitivity in the FM broadcast band is improved 0.5 dB or more in comparison with a case out of the range of 0.3 - 20 µH. Further, the high frequency choking coil 52 is more preferably of an inductance value in a range of 0.8 - 4.8 µH. When the inductance value of the high frequency choking coil 52 is within the range of 0.8 - 4.8 µH, the sensitivity in the FM broadcast band is improved 2 dB or more in comparison with a case out of the range of 0.8 - 4.8 µH.

With respect to the self-resonance frequency f_{R} of the high frequency choking coil 52, a relation of f_{H}/15 ≦ f_{R} ≦ 3f_{L} should be satisfied between the highest frequency f_{H} of the high frequency band and the lowest frequency f_{L} of the high frequency band. When f_{R} is within this range, the sensitivity in the high frequency band is generally improved 0.5 dB or more in comparison with a case having a range out of this range. Further, it is more preferable to satisfy a condition of f_{H}/9 ≦ f_{R} ≦ 2f_{L}. When f_{R} is within this range, the sensitivity in the high frequency band is generally improved 0.5 dB or more in comparison with a case having a range out of this range. Further, it is in particular preferable to satisfy a condition of f_{H}/3 ≦ f_{R} ≦ 1.85f_{L}. When f_{R} is within this range, the sensitivity in the high frequency band is generally improved 0.5 dB or more in comparison with a case having a range out of this range.

Accordingly, for example, when the high frequency band is used for an FM broadcast band in Japan, a preferred range of the self-resonance frequency f_{R} of the high frequency choking coil 52 is 6 - 228 MHz, more preferably, 10 - 152 MHz, and particularly preferably, 30 - 140 MHz. When the high frequency band is for an FM broadcast band in U.S.A., a preferred range of the self-resonance frequency f_{R} of the high frequency choking coil 52 is 7.2 - 264 MHz, more preferably, 12 - 176 MHz, and particularly preferably, 36 - 162 MHz.

In an equivalent circuit of the high frequency choking coil 52, a parallel circuit of a coil and a capacitor is obtainable wherein the parallel resonance frequency of the coil and the capacitor is a self-resonance frequency.

In Figure 1, it is preferable for the antenna conductor 3 and the defogger 90 to have no capacitive coupling relation. When they have a capacitive coupling relation, received signals in the high frequency band, excited in the antenna conductor 3, are apt to leak to the automobile body as the earth through the defogger 90 and the choke coil 9. In order to prevent the antenna conductor 3 and the defogger 90 from having a capacitive coupling relation, the shortest distance between the antenna conductor 3 and the defogger 90 should generally be 5 mm or more. When the shortest distance is 5 mm or more, the sensitivity in the high frequency band is generally improved 0.5 dB or more in comparison with a case that the shortest distance is less than 5 mm. More preferably, the shortest distance should generally be 10 mm or more. In this case, the sensitivity in the high frequency band is generally improved 0.5 dB or more in comparison with a case that the shortest distance is less than 10 mm. In particular, the shortest distance should generally be 20 mm or more. In this case, the sensitivity in the high frequency band is generally improved 0.5 dB or more in comparison with a case that the shortest distance is less than 20 mm.

The above-mentioned condition of the shortest distance between the antenna conductor 3 and the defogger 90 is generally applied to a case that the length of portions extending in substantially parallel in the antenna conductor 3 and the defogger 90 is 100 mm or more.

The damping resistors 20, 21 are provided according to requirement, and these are provided to adjust the Q (quality factor) for the second resonance whereby the sensitivity of received signals is flattened. The resistance value of the damping resistors 20, 21 is generally 10 Ω - 500 kΩ. When the low frequency is for a middle wave broadcast band, the resistance value of the damping resistors 20, 21 should be 1 - 100 kΩ, in particular, 2 - 50 kΩ.

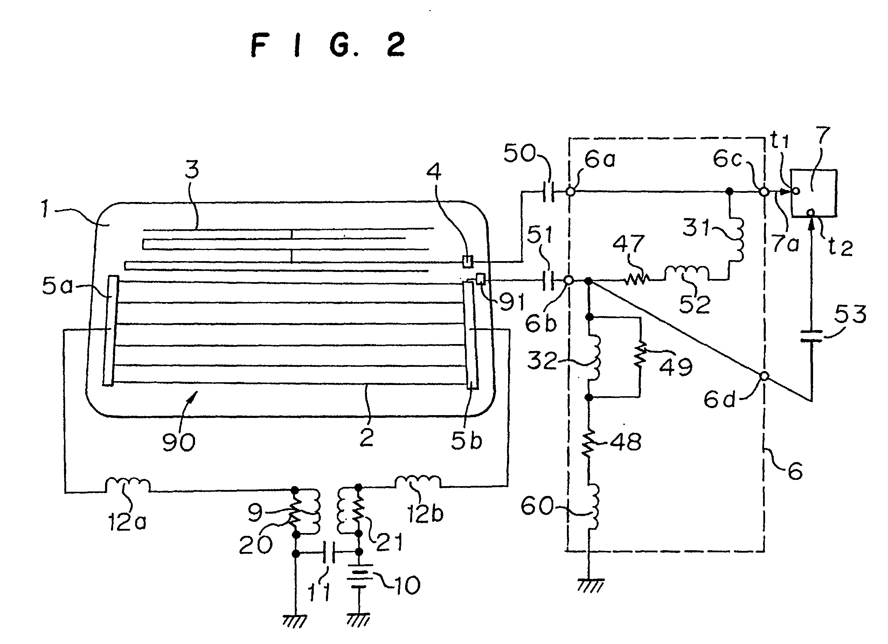

Figure 2 shows a modified form of the glass antenna device for an automobile shown in Figure 1 wherein it is adaptable to diversity signal reception. In Figure 2, reference numeral 6d an output terminal of the resonance circuit 6, numerical 53 designates a capacitor, numeral 60 designates a high frequency choking coil, symbol t₁ designates a first input terminal of the receiver 7 and symbol t₂ designates a second input terminal of the receiver 7. The receiver 7 is adapted to select a stronger received signal of high frequency band at either the first input terminal t₁ or the second input terminal t₂.

The capacitor 53 is provided according to requirement, which functions to block or attenuate received signals in the low frequency band. When the low frequency band is for a middle wave broadcast band and the high frequency band is for an FM broadcast band, the capacitance value of the capacitor 53 is preferably within a range of 10 - 150 pF, more preferably, 20 - 70 pF. When the capacitance value of the capacitor 53 is 10 pF or more, the sensitivity in the FM broadcast band is generally improved 1 dB or more at the second input terminal t₂ in comparison with a case that the capacitance value is less than 10 pF. Further, when the capacitance value of the capacitor 53 is 150 pF or less, the sensitivity in the middle wave broadcast band is generally improved 1 dB or more at the first input terminal t₁ in comparison with a case that the capacitance value exceeds 150 pF. Further, when the capacitance value of the capacitor 53 is 20 pF or more, the sensitivity in the FM broadcast band is generally improved 1 dB or more at the second input terminal t₂ in comparison with a case of the value being less than 20 pF. Further, when the capacitance value of the capacitor 53 is 70 pF or less, the sensitivity in the middle wave broadcast band is generally improved 1 dB or more at the first input terminal t₁ in comparison with a case of the capacitance value exceeding 70 pF.

A case that the second coil 32 exhibits a capacitive property in a high frequency and such as an FM broadcast band among several broadcast bands, received signals leak to the automobile body as the earth whereby the sensitivity is reduced. In order to prevent such disadvantage, the high frequency choking coil 60 may be connected in series to the second coil 32. The high frequency choking coil 60 having about 0.1 - 100 µH is generally used.

In the glass antenna device for an automobile shown in Figure 2, it is preferable to connect a high frequency choking coil 12a and/or a high frequency choking coil 12b between the bus bars 5a, 5b and the automobile body as the earth. Since received signal of high frequency band, which are not used in the device shown in Figure 1, excited in the defogger 90 are used at the second input terminal t₂, the received signals of high frequency band excited in the defogger 90 are prevented from leaking to the automobile body as the earth by means of the high frequency choking coils 12a, 12b.

In Figure 2, the second input terminal t₂ of the receiver 7 is drawn from the inside of the resonance circuit 6 (a left end of the capacitor 53 is connected to a point in the resonance circuit 6). However, the drawing point for the second input terminal t₂ is not limited to the inside of the resonance circuit 6 but it may be drawn from any point of the defogger 90. Further, an antenna conductor which is separated from the antenna conductor 3 may be provided in a space whish is lower in position than the defogger 90 so as to conduct diversity signal reception between the first input terminal t₁ and the separate antenna conductor.

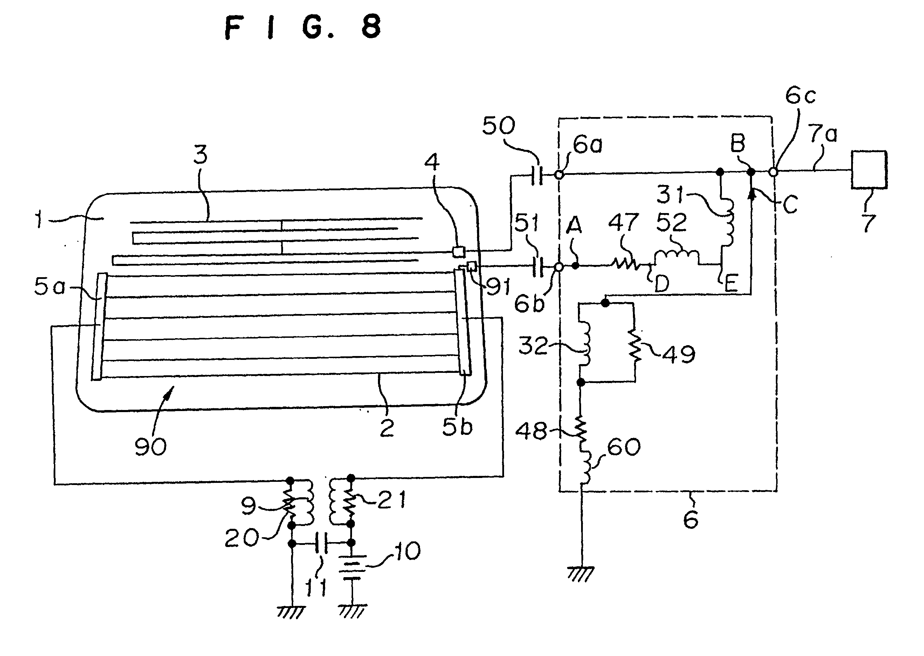

Figure 8 is a diagram showing another embodiment of the present invention which is separated from that shown in Figure 1 wherein symbol A designates a point in a line extending between the defogger 90 and the resistor 47, symbol B designates a point in a line extending between the power feeding pint 4 and the receiver 7, symbol C designates a point connected to an end of the second coil 32, the point being opposite to the side of automobile body as the earth, and symbols D and E designate points extending in a line between the point A and the point B. In the glass antenna device shown in Figure 1, the point C is connected to the point A. However, in the glass antenna device shown in Figure 8, the point C is connected to the point B.

The glass antenna device of the present invention is not limited to the constructions as shown in Figures 1 and 8 but the point C may be connected to any point of the line between the point A and the point B. In other words, the second coil 32 may be electrically connected between the line connecting the defogger 90 to the receiver 7 and the automobile body as the earth by interposing at least one of a line and a circuit element. For example, the point C may be connected to the point D, or the point C may be connected to the point E. However, it is preferable that the point C is connected to the point A or the point D. In other words, it is preferable that the point C is connected to a point of line which is closer to the defogger 90 rather than the high frequency choking coil 52.

The reason is as follows. When the point C is connected to the point E or the point B, i.e., when the point C is connected to a point in a line between the receiver 7 and the defogger 90, the point being remote from the defogger 90 with respect to the high frequency choking coil 52, it is necessary to provide the high frequency choking coil 60 as a high frequency choking inductance element because received signals of high frequency band at the point B leak to the automobile body as the earth.

In Figure 8, it is preferable that the antenna conductor 3 and the defogger 90 are not in a capacitive coupling relation. When they are brought into a capacitive coupling relation, received signals in a high frequency band excited in the antenna conductor 3 are apt to leak to the automobile body as the earth through the defogger 90 and the choke coil 9. This function is performed in the same manner as that in Figure 1.

In Figure 8, the point C is connected to a point of line which is closer to the receiver 7 rather than the first coil 31. Accordingly, the impedance of the cable 7a influences largely the second resonance in comparison with a case that the point C is connected to a point of line which is closer to the defogger 90 rather than the first coil 31. Namely, there causes the second resonance by a resonance element comprising the impedance of the cable 7a and the inductance of the second coil 32. In Figure 8, the second resonance is a parallel resonance wherein the impedance of the cable 7a is mainly comprised of a stray capacitance 35. When the resonance circuit 6 is provided in the rear window glass sheet 1 or when the resonance circuit 6 is provided in the vicinity of the rear window glass sheet 1, the length of the cable 7a is several meters and the capacitance value of the stray capacitance 35 is generally 50 - 300 pF since the receiver 7 is usually provided in a front portion of the automobile body.

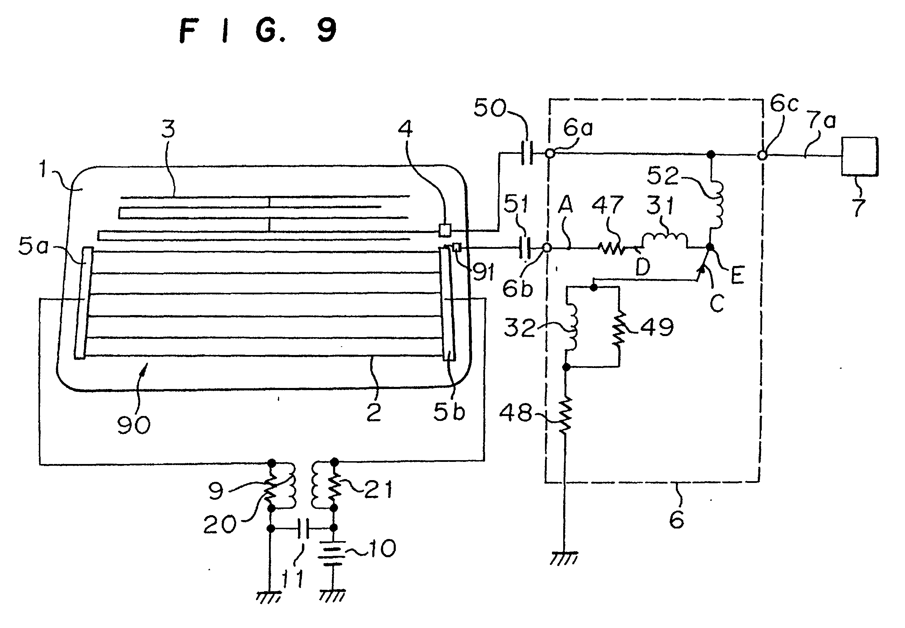

Even in the case of Figure 8, the first resonance is generated by a resonance element comprising the impedance of the defogger 91 and the inductance of the first coil 31. In Figure 8, the first resonance is a series resonance. In the glass antenna device shown in Figure 8, the stray capacitances 33, 35 and the close capacitance between the antenna conductor 3 and the defogger 90 influence the second resonance in comparison with the case of the glass antenna device shown in Figure 1. Further, all the conditions described with reference to Figure 1, such as circuit constants, the self-resonance frequency f_{R} of the high frequency choking coil 53, the shortest distance between the antenna conductor 3 and the defogger 90 and so on, can be applied to the embodiment shown in Figure 8 or an embodiment which will be described with reference to Figure 9.

In the embodiments shown in Figures 8 and 9, when the point C is connected to a point of line which is closer to the receiver 7 rather than the first coil 31, a third resonance may be generated in addition to the first resonance and the second resonance. The third resonance is caused by a resonance element which comprises mainly the inductance of the choke coil 9 and the impedance of the defogger 90. However, the third resonance should not be generated as possible. When a frequency of noises exists in the vicinity of the resonance frequency of the third resonance, good signal receiving performance can not be expected because of suffering influence of noises. The third resonance can be suppressed by making the capacitor 50 smaller. The capacitance value of the capacitor 51 to suppress the third resonance is preferably 2,000 pF or less, in particular, 1,000 pF or less.

When the third resonance is generated, the inductance of the choke coil 9 and the impedance of the defogger 90 constitute mainly resonance elements for the third resonance. Further, the resonance frequency of the third resonance is preferably lower than the resonance frequency of the second resonance because influence to the sensitivity in the low frequency band due to a scattering of L_{CH} in a large scale production can be reduced. From such reason, when the low frequency band is used for a middle wave broadcast band, the resonance frequency of the third resonance is preferably 50 - 450 kHz, more preferably, 100 - 400 kHz or lower, and in particular, 150 - 350 kHz or lower.

Figure 9 is a diagram showing an embodiment which is a modified form of the embodiment shown in Figure 8 wherein the order of connection of the first coil 31 and the high frequency choking coil 52 is changed. In Figure 9, the resistor 47, the first coil 31 and the high frequency choking coil 52 are connected in this order in view of a side of the second input terminal 6b between the second input terminal 6b and the output terminal 6c, and the point C is connected to the point E in the line between the first coil 31 and the high frequency choking coil 52. In Figure 9, since the point C is connected to the line extending between the second input terminal 6b and the output terminal 6c and at a point closer to the defogger 90 rather than the high frequency choking coil 52, received signals in the high frequency band at the output terminal 6c are blocked by the high frequency choking coil 52 to prevent the signals from leaking to the automobile body as the earth. Accordingly, in this embodiment, it is unnecessary to provide the high frequency choking coil 60 as in Figure 8.

In the present invention, it is preferable from the viewpoint of reducing noises that the resonance circuit 6 is located in the rear window glass sheet 1 or in the vicinity of the rear window glass sheet 1. However, it may be in the rear window glass sheet 1 or in the vicinity of the rear window glass sheet 1, e.g., in the vicinity of the receiver 7 or in the receiver 7.

The reason why resonance is generated in two portions in the present invention is because only a single resonance can not cover a broader signal frequency band region. In the present invention, accordingly, a low frequency band region is divided into two portions with respect to the substantially central frequency wherein the divided portions are respectively shared by the two portions of resonance so that the sensitivity is to be flattened. Here, the flattening of the sensitivity means that a difference between the highest sensitivity and the lowest sensitivity in the low frequency band region is reduced.

A resonance frequency for the first resonance and a resonance frequency for the second resonance are determined to be frequencies by which the sensitivity in the low frequency band is improved. However, it is preferable from the viewpoint of flattening the sensitivity that a resonance frequency for the first resonance exists between a frequency of 1.5 times as much as the highest frequency f_{LH} of the low frequency band and a substantially central frequency of the low frequency band, and a resonance frequency for the second resonance exists between a frequency of 0.6 time as much as the lowest frequency f_{LL} of the flow frequency band and a substantially central frequency of the low frequency band. When the above-mentioned resonance frequencies are out of these ranges, it is difficult that a difference between the highest sensitivity and the lowest sensitivity in the low frequency band is generally reduced to about 10 dB or less, and the flatness in the sensitivity in the low frequency band is poor.

Further, it is preferable from the viewpoint of improving the sensitivity that the resonance frequency for the first resonance is in the low frequency band region. When it is in the low frequency band region, the sensitivity in the entire low frequency band region is generally improved about 10 dB in comparison with a case that the resonance frequency is not. Accordingly, in order to improve both aspects of the flatness and the sensitivity, the resonance frequency for the first resonance should be between the before-mentioned f_{LH} and the substantially central frequency of the low frequency band, and the resonance frequency for the second resonance between a frequency of 0.6 time as much as the before-mentioned f_{LL} and the substantially central frequency of the low frequency band.

When the first resonance is a series resonance, the resonance frequency for the first resonance is preferably higher than the substantially central frequency of the low frequency band. When the second resonance is a parallel resonance, the resonance frequency for the second resonance is preferably lower than the substantially central frequency of the low frequency band. When the second resonance is a parallel resonance, there is a remarkable reduction of the sensitivity in a range lower than the resonance frequency in the parallel resonance.

When the low frequency band is used for a middle wave broadcast band, a preferred range of a resonance frequency for the parallel resonance is 318 - 1,080 kHz in considering an aspect of flattening the sensitivity. Further, in the consideration for improving the S/N ratio, it is preferable that the resonance frequency for the parallel resonance is 350 - 530 kHz, more preferably, 450 - 500 kHz.

Figure 4 is a circuit diagram showing a modified embodiment of the resonance circuit 6. In Figure 4, reference numeral 41, 44, 50, 51 and 54 designate capacitors for cutting a direct current, numeral 43 designates a coupling capacitor, numerals 45, 46, 48 and 49 designate damping resistors, numeral 55 designates a resistor for adjusting coupling and numeral 56 designates a capacitor for adjusting coupling.

In the resonance circuit in Figure 4, received signals in the defogger 90 are transmitted to a side of the receiver through the capacitor 51, the resistor 47 and the capacitor 43. However, when the antenna conductor 3 and the defogger 90 have a capacitive coupling relation, received signals in the defogger 90 are transmitted to the receiver side through the close capacitance. The capacitors 43 and 56 are to adjust the coupling between the antenna conductor 3 and the defogger 90, which are used according to requirement. Further, the resistors 45, 46, 48, 49 and 55 which are to improve the flatness of the sensitivity, are provided according to requirement. Further, a capacitor for adjusting the resonance frequency may be provided.

The capacitors 41, 43, 44, 50, 51 and 54 are provided according to requirement. The capacitors 41, 44, 51 and 54 used are usually of 100 pF - 50 µF. The capacitor 50 used is usually of 1 pF - 1 µF. The capacitor 43 used is usually of 5 - 500 pF. The resistors 45, 46, 49 and 55 used are usually of 50 Ω - 100 kΩ.

When the low frequency band is used for a long wave broadcast band or a middle wave broadcast band and the high frequency band is for an FM broadcast band or a TV-VHF band, a preferred range of capacitance of the capacitor 50 is 4.0 - 220 pF. In this range, the sensitivity in the FM broadcast band and the TV-VHF band is generally improved 0.5 dB or more in comparison with a case that the capacitance is out of this range. When the capacitance of the capacitor 50 is 100 pF or less, the sensitivity in the middle wave broadcast band is generally improved several dB or more in comparison with a case of the capacitance exceeding 100 pF, which is preferable when signals in the middle wave broadcast band are to be received.

The capacitance value of the capacitor 51 is preferably within a range of 100 pF - 10 µF. In this range, the sensitivity in the long wave broadcast band and the middle wave broadcast band is generally improved 0.5 dB or more in a case that the value is out of this range.

Further, a lead wire for feeding a direct current from the d.c. power source 10 to the defogger 90 may take noises of the automobile such as engine noises to invite deterioration of the S/N ratio. The resistor 47 is disposed according to requirement, which prevents the deterioration of the S/N ratio. In particular, it functions to prevent the deterioration of the S/N ratio in the middle wave broadcast band. Namely, the resistor 47 functions to reduce noises of the automobile such as engine noises. Further, the resistor 47 functions as a damping resistor for the first resonance and flattens the sensitivity of signals in the low frequency band.

The resistance value of the resistor 47 is preferably 10 Ω - 1 kΩ, more preferably, 50 - 500 Ω. When signals in a middle wave broadcast band are received as those in the low frequency band and the resistance value of the resistor 47 is determined to be 10 Ω - 1 kΩ, the S/N ratio in the middle wave broadcast band is improved 1 dB or more in comparison with a case that the range is out of 10 Ω - 1 kΩ. Further, when the resistance value of the resistor 47 is to be 50 - 500 Ω, the S/N ratio in the middle wave broadcast band is improved 1 dB or more in comparison with a case that the range is out of 50 - 500 Ω.

As described above, the capacitors 41, 43, 44, 50, 51, 54 and 56 and resistors 45, 46, 47, 48, 49 and 55 in Figure 4 are provided according to requirement, or they may be omitted. Here, the omission of the capacitor 56 and the omission of the resistors 45, 46, 49 and 55 imply opening, and the omission of the capacitors 41, 43, 44, 50, 51 and 54 and the omission of the resistors 47 and 48 imply short-circuiting.

In Figure 2, the choke coil 9 and the high frequency choking coils 12a, 12b are inserted between the bus bars 5a, 5b and the d.c. power source 10 for the defogger 90 to thereby increase the impedance of the choke coil 9 and the high frequency choking coils 12a, 12b in a broadcast frequency band region, whereby a direct current from the d.c. power source 10 to the defogger 90 is allowed to flow and a current in the broadcast frequency band region is blocked.

Thus, the heater strips 2 and the bus bars 5a, 5b in the defogger 90 are isolated from the automobile body as the earth with respect to a high frequency signal by means of the choke coil 9 and the high frequency choking coils 12a, 12b, whereby a current of received signal of broadcast frequency band region induced in the defogger 90 is prevented from flowing into the automobile body as the earth, and the current of received signal is supplied to the receiver without any leakage. The choke coil 9 generally used is of about 0.1 - 10 mH.

The high frequency choking coils 12a, 12b and the high frequency choking coil 60 provide a high impedance in a high frequency band such as an FM broadcast frequency band in a broadcast frequency band. Accordingly, a solenoid or a magnetic core is generally used. Such element exhibits an inductive type inductance in a high frequency band such as an FM broadcast frequency band or in the vicinity of such frequency band region.

When the choke coil 9 exhibits a low self-resonance frequency in a high frequency band such as an FM broadcast band and shows a capacitive property, the high frequency choking coils 12a, 12b act for it. For the high frequency choking coils 12a, 12b, ones having about 0.1 - 100 µH are usually used. From the same reason as the above, when the second coil exhibits a low self-resonance frequency in a high frequency band such as an FM broadcast band and shows a capacitive property, the high frequency choking coil 60 acts for it.

When the choke coil 9 exhibits a capacitive property in a high frequency band such as an FM broadcast band, the high frequency choking coils 12a, 12b become unnecessary. In short, when only signals in a low frequency band such as a middle wave broadcast band are to be received, the high frequency choking coils 12a, 12b are generally unnecessary and it is enough to provide only the choke coil 9. When signals in only a high frequency band such as an FM broadcast band are to be received, only the high frequency choking coils 12a, 12b are required. Further, if any coil or coils which perform both functions of the choke coil 9 and the high frequency choking coils 12a, 12b can be provided in a case of receiving signals in a low frequency band and a high frequency band, such coil or coils may be used.

In Figure 1, the choke coil 9 is connected both between the bus bar 5b and the d.c. power source 10 and between the bus bar 5a and the automobile body as the earth from the viewpoint of improving the sensitivity. However, the choke coil 9 can be connected either between the bus bar 5b and the d.c. power source 10 or between the bus bar 5a and the automobile body as the earth.

The defogger 90 shown in Figure 1 or Figure 2 is substantially in a trapezoidal form, however, the defogger 90 of the present invention is not limited thereto, and a channel-like defogger 90 as shown in Figure 7 may be utilized in the present invention.

In the present invention, the antenna conductor 3 may be provided in a space of upper, lower, left or light portion with respect to the defogger 90 in the window glass sheet 1 and the position is not limited to that shown in Figure 1. Further, the number of antenna conductors to be provided is not limited. Further, the glass antenna device of the present invention may perform diversity signal reception in association with an antenna device such as a pole antenna device or another glass antenna device.

Either of the antenna conductor 3 or the defogger 90 shown in Figure 1 is not provided with an auxiliary antenna conductor. For phase adjustment and directivity adjustment, an auxiliary antenna conductor having a substantially T-like shape or a substantially L-like shape may be connected to a suitable position of a conductor pattern or a power feeding point.

### EXAMPLE

### EXAMPLE 1

A rear window glass sheet for an automobile was used and a glass antenna device as shown in Figure 1 was prepared. The damping resistors 20, 21 were not provided, and the portions corresponding to the resistors 20, 21 were opened. Further, the resistor 48 was not provided, and the portion corresponding to the resistor 48 was short-circuited. The circuit constants of the elements used are shown in Table 1.

The length of conductor and the shape of conductor of the antenna conductor 3 were adjusted so that signals in a middle wave broadcast band and an FM broadcast band could be received. The distance between a lower portion of the antenna conductor 3 and the highest position of strip of the heater strips 2 was spaced to be 21 mm. In this case, the antenna conductor 3 and the defogger 90 had a slight capacitive relation.

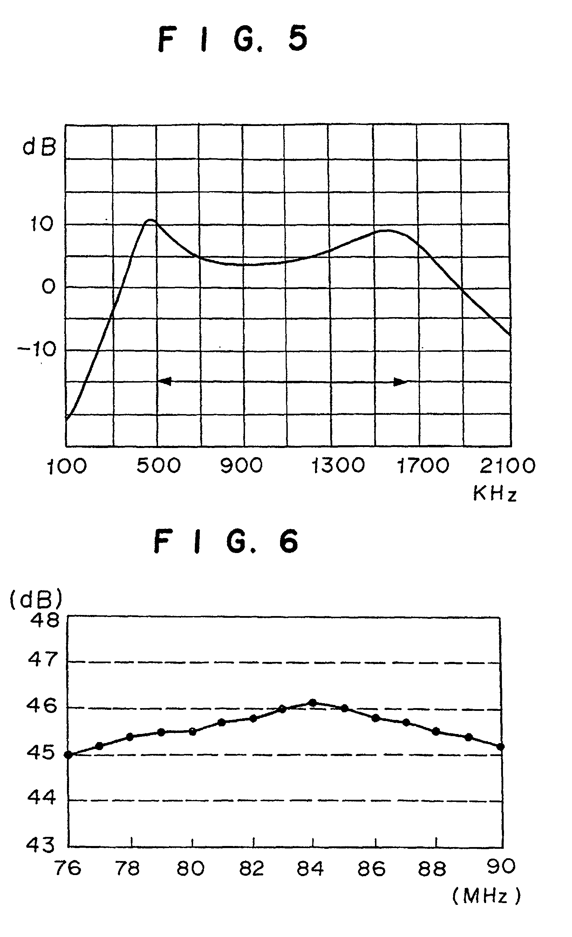

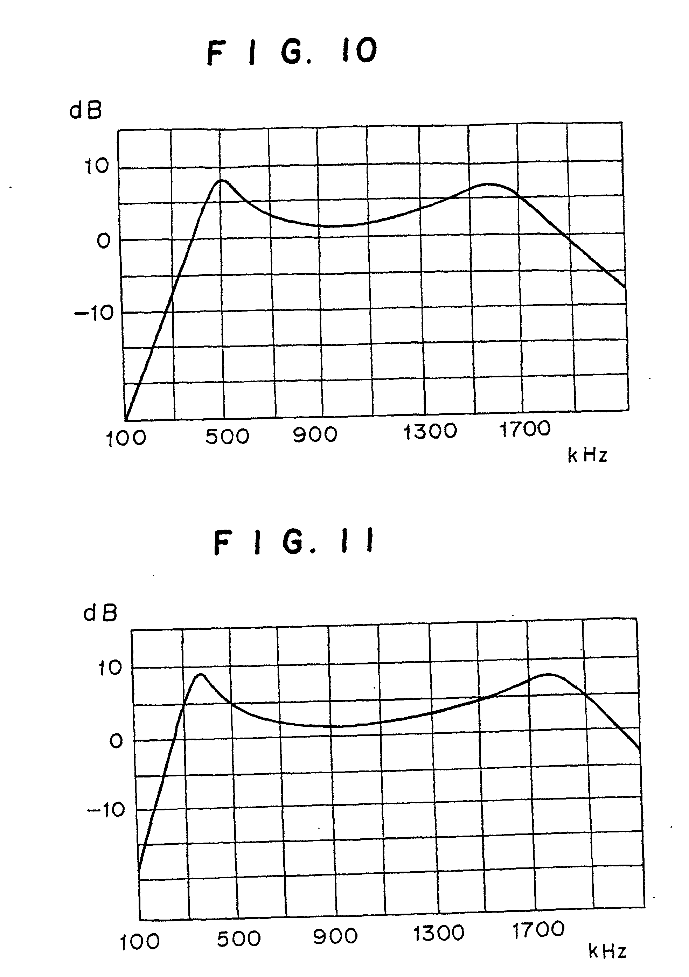

Figure 5 is a characteristic diagram of frequency vs sensitivity in a middle wave broadcast band in comparison with using a pole antenna. In Figure 5, the range of arrow mark indicates a middle wave broadcast band region. In Figure 5, the sensitivity of the pole antenna having a length of 910 mm is compared with that of the glass antenna device of the present invention wherein the sensitivity of the pole antenna is 0 dB. The same conditions of pole antenna as described above are applied to description made with reference to Figures 10 to 15. Figure 6 is a characteristic diagram of frequency vs sensitivity in an FM broadcast band.

**Table 1**

| | |
|---|---|
| First coil 31 | 120 µH |
| Second coil 32 | 560 µH |
| High frequency choking coil 52 | 2.2 µH |
| Self-resonance frequency of high frequency choking coil 52 | 90 MHz |
| Resistor 47 | 220 Ω |
| Resistor 49 | 10 kΩ |
| Capacitor 50 | 22 pF |
| Capacitor 51 | 2,200 pF |
| Choke coil 9 | 1.6 mH |
| Stray capacitance of defogger 90 | 100 pF |

### EXAMPLE 2

A glass antenna device was prepared in the same manner as Example 1 except that the circuit constants of the elements were determined as shown in Table 2. Figure 10 is a characteristic diagram of frequency vs sensitivity in comparison with a pole antenna for a middle wave broadcast band. With respect to frequency-sensitivity characteristics in an FM broadcast band, the substantially same result as Example 1 could be obtained.

**Table 2**

| | |
|---|---|
| First coil 31 | 120 µH |
| Second coil 32 | 330 µH |
| Self-resonance frequency of second coil 32 | 9 MHz |
| High frequency choking coil 52 | 2.2 µH |
| Self-resonance frequency of high frequency choking coil 52 | 90 MHz |
| Resistor 47 | 220 Ω |
| Resistor 49 | 4.7 kΩ |
| Capacitor 50 | 22 pF |
| Capacitor 51 | 2,200 pF |
| Choke coil 9 | 1.6 mH |
| Self-resonance frequency of choke coil 9 | 0.4 MHz |
| Stray capacitance of defogger 90 | 100 pF |
| Stray capacitance of antenna conductor 3 | 80 pF |
| Close capacitance of antenna conductor 3 and defogger 90 | 20 pF |
| Stray capacitance of cable 7a | 120 pF |

### EXAMPLE 3

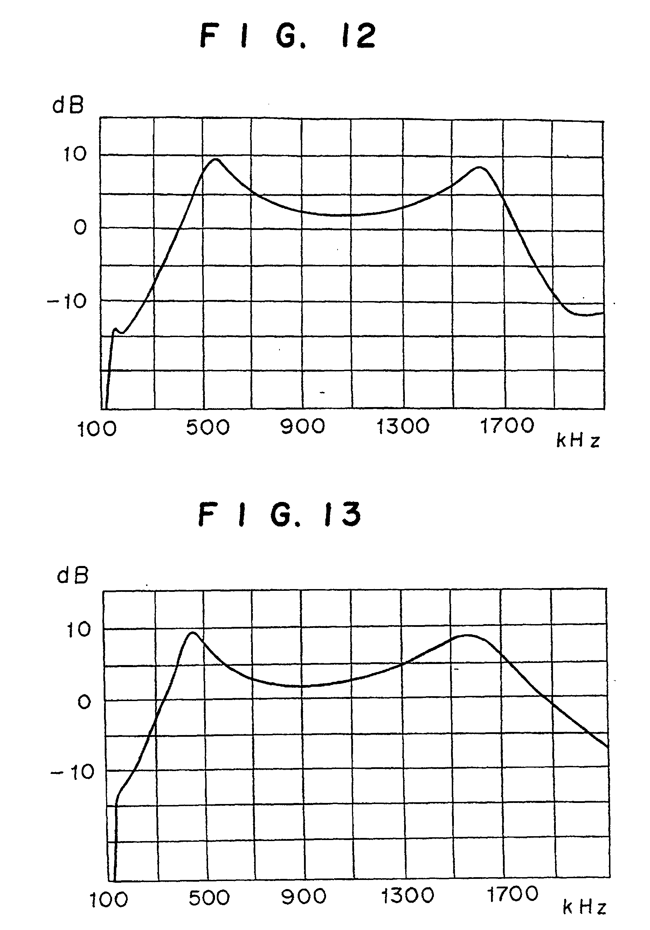

A glass antenna device was prepared in the same manner as Example 1 except that the circuit constants of the elements were determined as in Table 3. Figure 11 is a characteristic diagram of frequency vs sensitivity in comparison with a pole antenna for a middle wave broadcast band. With respect to frequency-sensitivity characteristics in an FM broadcast band, the substantially same result as Example 1 was obtained.

**Table 3**

| | |
|---|---|
| First coil 31 | 70 µH |
| Second coil 32 | 800 µH |
| Self-resonance frequency of second coil 32 | 4 MHz |
| High frequency choking coil 52 | 10 µH |
| Self-resonance frequency of high frequency choking coil 52 | 40 MHz |
| Resistor 47 | 220 Ω |
| Resistor 49 | 10 kΩ |
| Capacitor 50 | 22 pF |
| Capacitor 51 | 2,200 pF |
| Choke coil 9 | 2.5 mH |
| Self-resonance frequency of choke coil 9 | 0.58 MHz |
| Stray capacitance of defogger 90 | 50 pF |
| Stray capacitance of antenna conductor 3 | 30 pF |
| Close capacitance of antenna conductor 3 and defogger 90 | 20 pF |
| Stray capacitance of cable 7a | 180 pF |

### EXAMPLE 4

A glass antenna device was prepared in the same manner as Example 1 except that the circuit constants of the elements were determined as shown in Table 4. Figure 12 is a characteristic diagram of frequency vs sensitivity in comparison with a pole antenna for a middle wave broadcast band. With respect to frequency-sensitivity characteristics in an FM broadcast band, the substantially same result as Example 1 was obtained.

**Table 4**

| | |
|---|---|
| First coil 31 | 180 µH |
| Second coil 32 | 400 µH |
| Self-resonance frequency of second coil 32 | 1.8 MHz |
| High frequency choking coil 52 | 1.0 µH |
| Self-resonance frequency of high frequency choking coil 52 | 130 MHz |
| Resistor 47 | 120 Ω |
| Resistor 49 | 5 kΩ |
| Capacitor 50 | 22 pF |
| Capacitor 51 | 220 pF |
| Choke coil 9 | 2.5 mH |
| Self-resonance frequency of choke coil 9 | 0.4 MHz |
| Stray capacitance of defogger 90 | 180 pF |
| Stray capacitance of antenna conductor 3 | 30 pF |
| Close capacitance of antenna conductor 3 and defogger 90 | 50 pF |
| Stray capacitance of cable 7a | 60 pF |

### EXAMPLE 5

A glass antenna device was prepared in the same manner as Example 1 except that the circuit constants of the elements were determined as shown in Table 5. Figure 13 is a characteristic diagram of frequency vs sensitivity in comparison with a pole antenna for a middle wave broadcast band. With respect to frequency-sensitivity characteristics in an FM broadcast band, the substantially same result as Example 1 was obtained.

**Table 5**

| | |
|---|---|
| First coil 31 | 150 µH |
| Second coil 32 | 1,200 µH |
| Self-resonance frequency of second coil 32 | 1.5 MHz |
| High frequency choking coil 52 | 5.0 µH |
| Self-resonance frequency of high frequency choking coil 52 | 70 MHz |
| Resistor 47 | 20 Ω |
| Resistor 49 | 3.3 kΩ |
| Capacitor 50 | 22 pF |
| Capacitor 51 | 500 pF |
| Choke coil 9 | 0.6 mH |
| Self-resonance frequency of choke coil 9 | 1.5 MHz |
| Stray capacitance of defogger 90 | 80 pF |
| Stray capacitance of antenna conductor 3 | 60 pF |
| Close capacitance of antenna conductor 3 and defogger 90 | 10 pF |
| Stray capacitance of cable 7a | 150 pF |

### EXAMPLE 6

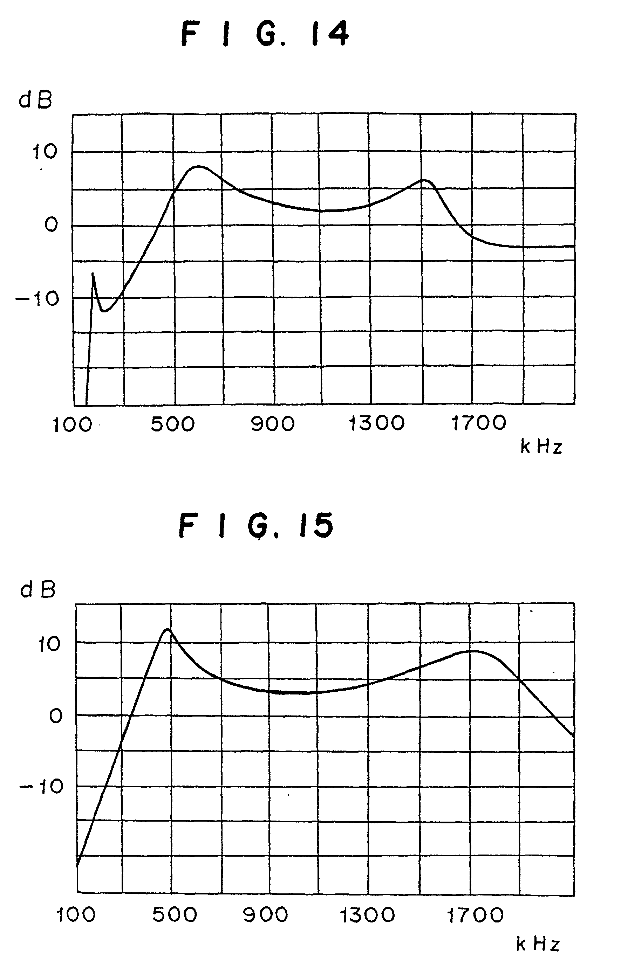

A glass antenna device was prepared in the same manner as Example 1 except that the circuit constants of 5 the elements were determined as shown in Table 6. Figure 14 is a characteristic diagram of frequency vs sensitivity in comparison with a pole antenna for a middle wave broadcast band. With respect to frequency-sensitivity characteristics in an FM broadcast band, the substantially same result as Example 1 was obtained.

**Table 6**

| | |
|---|---|
| First coil 31 | 200 µH |
| Second coil 32 | 390 µH |
| Self-resonance frequency of second coil 32 | 1.1 MHz |
| High frequency choking coil 52 | 2.2 µH |
| Self-resonance frequency of high frequency choking coil 52 | 90 MHz |
| Resistor 47 | 150 Ω |
| Resistor 49 | 2.7 kΩ |
| Capacitor 50 | 22 pF |
| Capacitor 51 | 1,000 pF |
| Choke coil 9 | 0.4 mH |
| Self-resonance frequency of choke coil 9 | 1.1 MHz |
| Stray capacitance of defogger 90 | 200 pF |
| Stray capacitance of antenna conductor 3 | 30 pF |
| Close capacitance of antenna conductor 3 and defogger 90 | 20 pF |
| Stray capacitance of cable 7a | 45 pF |

### EXAMPLE 7

A glass sheet for a rear window for an automobile was used and a glass antenna device as shown in Figure 9 was prepared. The damping resistors 20, 21 were not provided, and the locations corresponding to the resistors 20, 21 were opened. Further, the resistor 48 was not provided, and the location of the resistor 48 was short-circuited. The circuit constants of the elements were as shown in Table 7.

Figure 15 is a characteristic diagram of frequency vs sensitivity in comparison with a pole antenna for a middle wave broadcast band. With respect to frequency-sensitivity characteristics in an FM broadcast band, the substantially same result as Example 1 was obtained.

**Table 7**

| | |
|---|---|
| First coil 31 | 120 µH |
| Second coil 32 | 560 µH |
| Self-resonance frequency of second coil 32 | 8 MHz |
| High frequency choking coil 52 | 2.2 µH |
| Self-resonance frequency of high frequency choking coil 52 | 90 MHz |
| Resistor 47 | 220 Ω |
| Resistor 49 | 10 kΩ |
| Capacitor 50 | 22 pF |
| Capacitor 51 | 220 pF |
| Choke coil 9 | 1.6 mH |
| Self-resonance frequency of choke coil 9 | 0.72 MHz |
| Stray capacitance of defogger 90 | 100 pF |
| Stray capacitance of antenna conductor 3 | 30 pF |
| Close capacitance of antenna conductor 3 and defogger 90 | 20 pF |
| Stray capacitance of cable 7a | 120 pF |

According to the present invention, the first resonance is generated by a resonance element which comprises the impedance of the defogger and the inductance of the first coil, and the second resonance is generated by a resonance element which comprises the impedance of the defogger and the inductance of the second coil. Accordingly, the sensitivity in a low frequency band is excellent because resonance at two portions are utilized.

Further, the filter circuit is electrically connected between the antenna conductor and the defogger to block or attenuate received signals in a high frequency band. Accordingly, a possibility that received signals in the high frequency band excited in the antenna conductor leak to the automobile body as the earth or the like, can be reduced, and the reduction of sensitivity in the high frequency band can be prevented.

Even when both the inductance of the second inductance element and the inductance of the choke coil 9 are resonance elements for the second resonance, the resonance frequency for the second resonance can be changed by changing only the inductance of the second inductance element while the inductance of the choke coil 9 is not changed. Accordingly, the adjustment of the sensitivity in the low frequency band can easily be made.

## Claims

1. In a glass antenna device for an automobile wherein an electric heating type defogger (90) having heater strips (2) and bus bars (5a, 5b) for feeding a current to the heater strips (2), and an antenna conductor (3) are provided on a rear window glass sheet (1) fitted to a rear window opening of an automobile, and a choke coil (9) is connected to at least one between a bus bar (5b) and a d.c. power source (10) and between another bus bar (5a) and the automobile body as the earth so that a signal in a first frequency band (AM) and a signal in a second frequency band (FM) which is higher in frequency than the first frequency band (AM) are received, wherein
the defogger (90) functions as an antenna so that it receives a signal in at least the first frequency band (AM) and sends the signal to a receiver (7), and the antenna conductor (3) receives a signal in at least the second frequency band (FM) and sends the signal to the receiver (7), and
a first inductance element (31) and a second inductance element (32) are provided,
the glass antenna device being **characterized in that**:
a first resonance is generated by a resonance element which comprises the impedance of the defogger (90) and the inductance of the first inductance element (31),
a second resonance is generated by a resonance element which comprises the impedance of the defogger (90) and the inductance of the second inductance element (32), or the antenna conductor (3) and the receiver (7) are connected with a cable (7a) and a second resonance is generated by a resonance element which comprises the impedance of the cable (7a) and the inductance of the second inductance element (32),
the resonance frequency of the first resonance and the resonance frequency of the second resonance are determined so that the sensitivity of signal in the first frequency band (AM) is increased, and
a filter circuit (8) for blocking or attenuating a signal in the second frequency band is electrically connected between the antenna conductor (3) and the defogger (90).

2. The glass antenna device according to Claim 1,
**characterized in that** the first inductance element (31) is electrically connected between the defogger (90) and the receiver (7) and between the antenna conductor (3) and the defogger (90) by interposing at least one of a line and a circuit element, and
the second inductance element (32) is electrically connected between the defogger (90) and the automobile body as the earth by interposing at least one of a line and a circuit element.

3. The glass antenna device according to Claim 1 or 2,
**characterized in that** a serial connection circuit of the first inductance element (31) and the filter circuit (8) is electrically connected between the antenna conductor (3) and the defogger (90) by interposing at least one of a line and a circuit element.

4. The glass antenna device according to Claim 1, 2 or 3,
**characterized in that** the first resonance is a series resonance and the second resonance is a parallel resonance.

5. The glass antenna device according to any one of Claims 1 to 4,
**characterized in that** a register of 10 Ω - 1 kΩ is connected in series to the filter circuit.

6. The glass antenna device according to Claim 2 or 5,
**characterized in that** a capacitor (51) is electrically connected between an end at a defogger side of the second inductance element (32) and the defogger (90) by interposing at least one of a line and a circuit element.

7. The glass antenna device according to any one of Claims 1 to 6,
**characterized in that** a high frequency choking inductance element is included in the filter circuit (8), and the inductance value of the high frequency choking inductance element is 0.1 -100 µH.

8. The glass antenna device according to any one of Claims 1 to 6,
**characterized in that** a choke coil (9) is connected to at least one between a bus bar (5b) and a d.c. power source (10) and between another bus bar (5a) and the automobile body as the earth so that a signal in a first frequency band and a signal in a second frequency band which is higher in frequency than the first frequency band are received, and the inductance of the second inductance element (32), the inductance of the choke coil (9) and the impedance of the defogger (90) are included in resonance elements for the second resonance.

9. The glass antenna device according to Claim 8,
**characterized in that** the inductance of a parallel connection circuit of the second inductance element (32) and the choke coil (9) and the impedance of the defogger (90) constitute mainly resonance elements for the second resonance, and the second resonance is a parallel resonance.

10. The glass antenna device according to any one of claims 1 to 9,
**characterized in that** the inductance of the second inductance element (32) and the stray capacitance of the cable (7a) constitute mainly resonance elements for the second resonance.

11. The glass antenna device according to any one of Claims 1 to 10,
**characterized in that** received signals in the defogger (90), passing through the first inductance element (31) and received signals in the antenna conductor (3) are synthesized, and the synthesized signals are supplied to the receiver (7).

12. The glass antenna device according to any one of Claims 1 to 11,
**characterized in that** the inductance value of the first inductance element (31) is 10 µH - 1 mH and the inductance value of the second inductance element (32) is 10 µH - 1 mH.

13. The glass antenna device according to any one of Claims 1 to 12,
**characterized in that** the inductance value of the choke coil (9) is 0.1 - 10 mH.

14. The glass antenna device according to any one of Claims 1 to 13,
**characterized in that** the inductance value L₂ of the second inductance element (32) and the inductance value L_{CH} Of the choke coil (9) satisfy a relation of 1.5 x L₂ ≤ L_{CH}.

## Patentansprüche

1. Scheibenantennenvorrichtung für ein Automobil bzw. Fahrzeug, worin eine Antibeschlagseinheit (90) der elektrischen Heizart, welche Heizstreifen (2) und Sammelschienen (5a, 5b) zum Zuführen eines Stroms zu den Heizstreifen (2) aufweist, und ein Antennenleiter (3) auf bzw. an einer rückwärtigen Fensterglasscheibe (1) vorgesehen sind, die in eine rückwärtige Fensteröffnung eines Automobils eingepaßt ist, und eine Drosselspule (9) mit wenigstens einem zwischen einer Sammelschiene (5b) und einer Gleichstromquelle (10) und zwischen einer weiteren Sammelschiene (5a) und dem Automobilkörper als die Erde verbunden ist, so daß ein Signal in einem ersten Frequenzband (AM) und ein Signal in einem zweiten Frequenzband (FM), welches höher in der Frequenz als das erste Frequenzband (AM) ist, empfangen werden, worin
die Antibeschlagseinheit (90) als eine Antenne so funktioniert, daß sie ein Signal in wenigstens dem ersten Frequenzband (AM) empfängt und das Signal einem Empfänger (7) übersendet, und daß der Antennenleiter (3) ein Signal in wenigstens dem zweiten Frequenzband (FM) erhält bzw. empfängt und das Signal dem Empfänger (7) sendet, und
ein erstes Induktanz- bzw. Induktionselement (31) und ein zweites Induktanz- bzw. Induktionselement (32) zur Verfügung gestellt sind,
wobei die Scheibenantennenvorrichtung **dadurch gekennzeichnet ist, daß**:
eine erste Resonanz durch ein Resonanzelement gebildet bzw. generiert ist, welches die Impedanz der Antibeschlagseinheit (90) und die Induktion bzw. Induktanz des ersten Induktionselements (31) umfaßt,
eine zweite Resonanz durch ein Resonanzelement generiert bzw. erzeugt ist, welches die Impedanz der Antibeschlagseinheit (90) und die Induktion des zweiten Induktionselements (32) umfaßt, oder der Antennenleiter (3) und der Empfänger (7) mit einem Kabel (7a) verbunden sind und eine zweite Resonanz durch ein Resonanzelement generiert ist, welches die Impedanz des Kabels (7a) und die Induktion bzw. Induktanz des zweiten Induktionselements (32) umfaßt,
die Resonanzfrequenz der ersten Resonanz und die Resonanzfrequenz der zweiten Resonanz so bestimmt sind, daß die Empfindlichkeit eines Signals in dem ersten Frequenzband (AM) erhöht ist, und
eine Filterschaltung (8) zum Blockieren oder Schwächen bzw. Dämpfen eines Signals in dem zweiten Frequenzband elektrisch zwischen dem Antennenleiter (3) und der Antibeschlagseinheit (90) angeschlossen bzw. verbunden ist.

2. Scheibenantennenvorrichtung nach Anspruch 1,
**dadurch gekennzeichnet, daß** das erste Induktionselement (31) elektrisch zwischen der Antibeschlagseinheit (90) und dem Empfänger (7) und zwischen dem Antennenleiter (3) und der Antibeschlagseinheit (90) durch Zwischenlagern von wenigstens einem aus einer Leitung und einem Schaltungs- bzw. Schaltkreiselement verbunden bzw. angeschlossen ist, und
das zweite Induktionselement (32) elektrisch zwischen der Antibeschlagseinheit (90) und dem Automobilkörper bzw. der Fahrzeugkarosserie als der Erde durch Zwischenlagern von wenigstens einem aus einer Leitung und einem Schaltkreiselement ist.

3. Scheibenantennenvorrichtung nach Anspruch 1 oder 2,
**dadurch gekennzeichnet, daß** eine serielle Verbindungsschaltung des ersten Induktionselements (31) und der Filterschaltung (8) elektrisch zwischen dem Antennenleiter (3) und der Antibeschlagseinheit (90) durch Zwischenlagern von wenigstens einem aus einer Leitung oder einem Schaltkreiselement verbunden ist.

4. Scheibenantennenvorrichtung nach Anspruch 1, 2 oder 3,
**dadurch gekennzeichnet, daß** die erste Resonanz eine Serienresonanz ist und die zweite Resonanz eine Parallelresonanz ist.

5. Scheibenantennenvorrichtung nach einem der Ansprüche 1 bis 4,
**dadurch gekennzeichnet, daß** ein Register von 10 Ω bis 1 kΩ in Serie mit der ersten Filterschaltung verbunden ist.

6. Scheibenantennenvorrichtung nach Anspruch 2 oder 5,
**dadurch gekennzeichnet, daß** eine Kapazität (51) elektrisch zwischen einem Ende einer Antibeschlagseinheitsseite des zweiten Induktionselements (32) und der Antibeschlagseinheit (90) durch Zwischenlagern von wenigstens einem aus einer Leitung und einem Schaltkreiselement verbunden ist.

7. Scheibenantennenvorrichtung nach einem der Ansprüche 1 bis 6,
**dadurch gekennzeichnet, daß** ein Hochfrequenzdrosselinduktionselement in der Filterschaltung (8) inkludiert ist und der Induktionswert des Hochfrequenzdrosselinduktionselements 0,1 bis 100 µH ist.

8. Scheibenantennenvorrichtung nach einem der Ansprüche 1 bis 6,
**dadurch gekennzeichnet, daß** eine Drosselspule (9) mit wenigstens einem zwischen einer Sammelschiene (5b) und einer Gleichstromquelle (10) und zwischen einer anderen Sammelschiene (5a) und dem Automobilkörper als der Erde verbunden ist, so daß ein Signal in einem ersten Frequenzband und ein Signal in einem zweiten Frequenzband, welches in der Frequenz höher als das erste Frequenzband ist, empfangen werden, und die Induktion bzw. Induktanz des zweiten Induktionselements (32), die Induktion bzw. Induktanz der Drosselspule (9) und die Impedanz der Antibeschlagseinheit (90) in Resonanzelementen für die zweite Resonanz enthalten sind.

9. Scheibenantennenvorrichtung nach Anspruch 8,
**dadurch gekennzeichnet, daß** die Induktion eines Parallelverbindungsschaltkreises des zweiten Induktionselements (32) und der Drosselspule (9) und die Impedanz der Antibeschlagseinheit (90) hauptsächlich Resonanzelemente für die zweite Resonanz ausbilden und die zweite Resonanz eine Parallelresonanz ist.

10. Scheibenantennenvorrichtung nach einem der Ansprüche 1 bis 9,
**dadurch gekennzeichnet, daß** die Induktion des zweiten Induktionselements (32) und die Streukapazität des Kabels (7a) hauptsächlich Resonanzelemente für die zweite Resonanz ausbilden.

11. Scheibenantennenvorrichtung nach einem der Ansprüche 1 bis 10,
**dadurch gekennzeichnet, daß** empfangene Signale in der Antibeschlagseinheit (90), welche durch das erste Induktionselement (31) hindurchtreten, und empfangene Signale in dem Antennenleiter (3) synthetisiert bzw. aufbereitet werden und die synthetisierten Signale dem Empfänger (7) zugeführt werden.

12. Scheibenantennenvorrichtung nach einem der Ansprüche 1 bis 11,
**dadurch gekennzeichnet, daß** der Induktanz- bzw. Induktionswert des ersten Induktionselements (31) 10 µH - 1 mH und der Induktanz- bzw. Induktionswert des zweiten Induktionselements (32) 10 µH - 1 mH ist.

13. Scheibenantennenvorrichtung nach einem der Ansprüche 1 bis 12,
**dadurch gekennzeichnet, daß** der Induktanz- bzw. Induktionswert der Drosselspule (9) 0,1 - 10 mH ist.

14. Scheibenantennenvorrichtung nach einem der Ansprüche 1 bis 13,
**dadurch gekennzeichnet, daß** der Induktanz- bzw. Induktionswert L₂ des zweiten Induktionselements (32) und der Induktanz- bzw. Induktionswert L_{CH} der Drosselspule (9) einer Beziehung von 1,5 x L₂ ≤ L_{CH} genügen.

## Revendications

1. Dispositif d'antenne de vitre pour automobile, dans lequel un dispositif anti-buée du type à chauffage électrique (90) ayant des bandes chauffantes (2) et des barres collectrices (5a, 5b) pour alimenter en courant les bandes chauffantes (2), et un conducteur d'antenne (3) sont disposés sur une vitre de lunette arrière (1) ajustée dans l'ouverture de la fenêtre arrière d'une automobile et une bobine de self (9) est connectée à au moins une barre collectrice (5b) ou à une source de courant continu (10) ou bien à une autre barre collectrice (5a) ou à la carrosserie de l'automobile en guise de terre de sorte que soient reçus un signal d'une première bande de fréquences (AM) et un signal d'une seconde bande de fréquences (FM), qui a des fréquences supérieures à celles de la première bande de fréquences (AM), dans lequel
le dispositif anti-buée (90) fonctionne comme antenne de manière à recevoir un signal dans au moins la première bande de fréquences (AM) et à envoyer le signal à un récepteur (7) et le conducteur d'antenne (3) reçoit un signal dans au moins la seconde bande de fréquences (FM) et envoie le signal au récepteur (7), et
un premier élément d'inductance (31) et un second élément d'inductance (32) sont aménagés,
le dispositif d'antenne de vitre étant **caractérisé en ce que** :
une première résonance est générée par un élément de résonance qui comprend l'impédance du dispositif anti-buée (90) et l'inductance du premier élément d'inductance (31),
une seconde résonance est générée par un élément de résonance qui comprend l'impédance du dispositif anti-buée (90) et l'inductance du second élément d'inductance (32), ou le conducteur d'antenne (3) et le récepteur (7) sont connectés par un câble (7a) et une seconde résonance est générée par un élément de résonance qui comprend l'impédance du câble (7a) et l'inductance du second élément d'inductance (32),
la fréquence de résonance de la première résonance et la fréquence de résonance de la seconde résonance sont déterminées de sorte que la sensibilité de signal dans la première bande de fréquences (AM) soit augmentée, et
un circuit de filtrage (8) pour bloquer ou atténuer un signal dans la seconde bande de fréquences est connecté électriquement entre le conducteur d'antenne (3) et le dispositif anti-buée (90).

2. Dispositif d'antenne de vitre selon la revendication 1, **caractérisé en ce que** le premier élément d'inductance (31) est connecté électriquement entre le dispositif anti-buée (90) et le récepteur (7) et entre le conducteur d'antenne (3) et le dispositif anti-buée (90) en intercalant au moins une ligne ou un élément de circuit, et
le second élément d'inductance (32) est connecté électriquement entre le dispositif anti-buée (90) et la carrosserie de l'automobile en guise de terre en intercalant au moins une ligne ou un élément de circuit.

3. Dispositif d'antenne de vitre selon la revendication 1 ou 2, **caractérisé en ce qu'**un circuit de connexion en série du premier élément d'inductance (31) et du circuit de filtrage (8) est connecté électriquement entre le conducteur d'antenne (3) et le dispositif anti-buée (90) en intercalant au moins une ligne ou un élément de circuit.

4. Dispositif d'antenne de vitre selon la revendication 1, 2 ou 3, **caractérisé en ce que** la première résonance est une résonance en série et la seconde résonance est une résonance en parallèle.

5. Dispositif d'antenne de vitre selon l'une quelconque des revendications 1 à 4, **caractérisé en ce qu'**un registre de 10 Ω à 1 kΩ est connecté en série au circuit de filtrage.

6. Dispositif d'antenne de vitre selon la revendication 2 ou 5, **caractérisé en ce qu'**un condensateur (51) est connecté électriquement entre une extrémité du côté du dispositif anti-buée du second élément d'inductance (32) et le dispositif anti-buée (90) en intercalant au moins une ligne ou un élément de circuit.

7. Dispositif d'antenne de vitre selon l'une quelconque des revendications 1 à 6, **caractérisé en ce qu'**un élément d'inductance à self de haute fréquence est inclus dans le circuit de filtrage (8) et la valeur d'inductance de l'élément d'inductance à self de haute fréquence est de 0,1 à 100 µH.

8. Dispositif d'antenne de vitre selon l'une quelconque des revendications 1 à 6, **caractérisé en ce qu'**une bobine de self (9) est connectée à au moins une barre collectrice (5b) ou à une source de courant continu (10) ou bien à une autre barre collectrice (5a) ou à la carrosserie de l'automobile en guise de terre de sorte que soient reçus un signal dans la première bande de fréquences et un signal dans une seconde bande de fréquences, qui a des fréquences supérieures à celles de la première bande de fréquences(AM), et l'inductance du second élément d'inductance (32), l'inductance de la bobine de self (9) et l'impédance du dispositif anti-buée (90) sont incluses dans des éléments de résonance pour la seconde résonance.

9. Dispositif d'antenne de vitre selon la revendication 8, **caractérisé en ce que** l'inductance d'un circuit de connexion parallèle du second élément d'inductance (32) et de la bobine de self (9) et l'impédance du dispositif anti-buée (90) constituent principalement des éléments de résonance pour la seconde résonance et la seconde résonance est une résonance parallèle.

10. Dispositif d'antenne de vitre selon l'une quelconque des revendications 1 à 9, **caractérisé en ce que** l'inductance du second élément d'inductance (32) et la capacité parasitaire du câble (7a) constituent principalement les éléments de résonance pour la seconde résonance.

11. Dispositif d'antenne de vitre selon l'une quelconque des revendications 1 à 10, **caractérisé en ce que** les signaux reçus dans le dispositif anti-buée (90) passant par le premier élément d'inductance (31) et les signaux reçus dans le conducteur d'antenne (3) sont synthétisés et les signaux synthétisés sont délivrés au récepteur (7).

12. Dispositif d'antenne de vitre selon l'une quelconque des revendications 1 à 11, **caractérisé en ce que** la valeur d'inductance du premier élément d'inductance (31) est de 10 µH à 1 mH et la valeur d'inductance du second élément d'inductance (32) est de 10 µH à 1 mH.

13. Dispositif d'antenne de vitre selon l'une quelconque des revendications 1 à 12, **caractérisé en ce que** la valeur d'inductance de la bobine de self (9) est de 0,1 à 10 mH.

14. Dispositif d'antenne de vitre selon l'une quelconque des revendications 1 à 13, **caractérisé en ce que** la valeur d'inductance L₂ du second élément d'inductance (32) et la valeur d'inductance L_{CH} de la bobine de self (9) répondent à la relation 1,5 x L₂ ≤ L_{CH}.
